**Europäisches Patentamt**

**European Patent Office**

**Office européen des brevets**

(19)

(11) Veröffentlichungsnummer: **0 100 026 B1**

(12) # EUROPÄISCHE PATENTSCHRIFT

(45) Veröffentlichungstag der Patentschrift:
**07.10.87**

(21) Anmeldenummer: **83106885.3**

(22) Anmeldetag: **13.07.83**

(51) Int. Cl.⁴: **C 01 G 56/00**, G 21 C 3/62, C 04 B 35/64

(54) **Verfahren zum Behandeln von Plutoniumoxid und/oder Plutonium-Uran-Mischoxid.**

(30) Priorität: **26.07.82 DE 3227868**

(43) Veröffentlichungstag der Anmeldung:
**08.02.84 Patentblatt 84/6**

(45) Bekanntmachung des Hinweises auf die Patenterteilung:
**07.10.87 Patentblatt 87/41**

(84) Benannte Vertragsstaaten:
**DE FR GB**

(56) Entgegenhaltungen:
FR - A - 2 344 929
US - A - 3 872 022
US - A - 4 052 330

JOURNAL OF NUCLEAR MATERIALS, Band 106, Apr. 1982, Nr. 1/3, Seiten 15-33, North-Holland Publishing Comp., Amsterdam (NL), H. ASSMANN: "Überblick über Zusammenhänge zwischen LWR-Brennstoff-Eigenschaften und Verfahrensabläufen bei der Brennstoffproduktion"

(73) Patentinhaber: **ALKEM GMBH, Postfach 110069, D-6450 Hanau 11 (DE)**
Patentinhaber: **Kernforschungszentrum Karlsruhe GmbH, Weberstrasse 5 Postfach 3640, D-7500 Karlsruhe 1 (DE)**

(72) Erfinder: **Schmidt, Henner, Paul-Marien-Strasse 45, D-6686 Eppelborn (DE)**
Erfinder: **Günther, Elmar, Alfred-Kretz-Strasse 21, D-7513 Stutensee 3 (DE)**
Erfinder: **Hanus, Dietmar, Dr., Frohsinnstrasse 6, D-8755 Alzenau (DE)**
Erfinder: **Wedemeyer, Horst, Dr., Kopernikusstrasse 13, D-7515 Linkenheim (DE)**

(74) Vertreter: **Mehl, Ernst, Dipl.-Ing., Postfach 22 01 76, D-8000 München 22 (DE)**

## Beschreibung

Die Erfindung betrifft ein Verfahren zum Behandeln von Plutoniumoxid und/oder Plutonium-Uran-Mischoxid durch Erhitzen in reduzierender Atmosphäre zum Zwecke des Einstellens eines vorgegebenen unterstöchiometrischen Wertes des Sauerstoff/Metall-Atomverhältnisses und anschliessendes Abkühlen des Oxides in einer Atmosphäre aus reduzierendem und/oder inertem Gas.

Ein derartiges Verfahren ist aus der deutschen Patentschrift 26 11 750 bekannt. Dort werden Tabletten aus Plutonium-Uran-Mischoxid in einem Gasgemisch aus Stickstoff und Wasserstoff, d.h. aus einem inerten und einem reduzierenden Gas in einem Reduktionsofen erhitzt. Anschliessend werden die Tabletten in einem Sinterofen in einem Gasgemisch aus Argon und Wasserstoff gesintert, das zum Abpuffern des Reduktionspotentials mit Spuren von Wasserdampf versetzt sein kann, so dass der gewünschte Stöchiometriewert des Sauerstoff/Metall-Atomverhältnisses in den Tabletten eingestellt wird. Die Tabletten werden nach dem Sintern in einem wassergekühlten Auslaufrohr auf Normaltemperatur (Zimmertemperatur) abgekühlt.

Nach dem bekannten Verfahren kann auch ein unterstöchiometrischer Wert des Sauerstoff/Metall-Atomverhältnisses im Plutonium-Uran-Mischoxid erreicht werden. Ein solcher unterstöchiometrischer Wert bewirkt in vorteilhafter Weise eine Verminderung der Innenkorrosion des Materials gasdicht verschlossener Brennstab-Hüllrohre, in denen sich das Mischoxid z. B. in Form von Tabletten im Kernreaktor befindet.

Es hat sich herausgestellt, dass bei Lagerung von derartig behandeltem Plutonium-Uran-Mischoxid insbesondere an normaler Luftatmosphäre das Sauerstoff/Metall-Atomverhältnis ansteigt und wieder von einem unterstöchiometrischen Wert dem stöchiometrischen Wert zustrebt. Auf Vorrat erzeugte Plutonium- oder Plutonium-Uran-Mischoxid-Tabletten müssen daher vor dem Einfüllen in Brennstab-Hüllrohre für Kernreaktoren einer erneuten Wärmebehandlung in reduzierender Atmosphäre unterworfen werden, um wieder den vorgegebenen unterstöchiometrischen Wert des Sauerstoff/Metall-Atomverhältnisses zu erreichen.

Der Erfindung liegt die Aufgabe zugrunde, eine solche erneute Wärmebehandlung insbesondere von länger eingelagertem Plutonium- oder Plutonium-Uran-Mischoxid zu vermeiden, ohne dass es zu einem unzulässig starken Ansteigen des Sauerstoff/Metall-Atomverhältnisses während des Lagerungszeitraumes kommt.

Zur Lösung dieser Aufgabe ist das eingangs erwähnte Verfahren erfindungsgemäss dadurch gekennzeichnet, dass das Oxid auf eine solche Temperatur unterhalb der Normaltemperatur abgekühlt und auf dieser Temperatur gehalten wird, bei der sein Sauerstoff/Metall-Atomverhältnis während eines vorgegebenen Lagerungszeitraumes den vorgegebenen Wert nicht überschreitet.

Die Erfindung geht hierbei von der Erkenntnis aus, dass der Anstieg des Sauerstoff/Metall-Atomverhältnis von gelagertem Oxid umso langsamer verläuft, je niedriger die Lagerungstemperatur ist. Es ist daher möglich, durch Wahl einer ausreichend niedrigen Lagerungstemperatur ein unzulässig starkes Ansteigen des Sauerstoff/Metall-Atomverhältnisses während des Lagerungszeitraumes zu vermeiden.

Günstigerweise wird das Oxid auf eine Temperatur abgekühlt und auf dieser Temperatur gehalten, bei der sich während des vorgegebenen Lagerungszeitraumes der Wert seines Sauerstoff/Metall-Atomverhältnisses um höchstens 0,01 erhöht. Dies stellt sicher, dass gasdicht verschlossene Brennstab-Hüllrohre, die mit Tabletten aus solchem gelagerten Oxid gefüllt sind, in einem Kernreaktor praktisch genauso wenig korrodieren wie gasdicht verschlossene Brennstab-Hüllrohre, in die Oxidtabletten mit dem gleichen unterstöchiometrischen Ausgangs-Sauerstoff/Metall-Atomverhältnis nach dem Sintern sofort eingefüllt worden sind.

Mit Vorteil kann das Oxid während des vorgegebenen Lagerungszeitraumes auch in sauerstoffhaltiger Atmosphäre, vorzugsweise Luft, gehalten werden, da, wie gefunden wurde, das Sauerstoff/Metall-Atomverhältnis des Oxids bei ausreichend niedriger Lagerungstemperatur auch in sauerstoffhaltiger und auch wasserdampfhaltiger Atmosphäre nicht merklich ansteigt. Das Oxid kann daher beispielsweise in gekühlten Lagerschränken gelagert werden, ohne dass besondere Massnahmen erforderlich sind, von diesen gekühlten Lagerschränken die normale Umgebungsatmosphäre bzw. Umgebungsluft fernzuhalten.

Die Erfindung und ihre Vorteile seien anhand der Zeichnung an Ausführungsbeispielen näher erläutert:

Fig. 1 zeigt schematisch einen gekühlten Lagerschrank zum Aufbewahren von Plutoniumoxid- und/oder Plutonium-Uran-Mischoxid-Tabletten während eines vorgegebenen Lagerungszeitraumes.

Die Fig. 2 bis 4 zeigen grafische Darstellungen des Sauerstoff/Metall-, d.h. O/M-Atomverhältnisses von verschiedenen Plutonium-Uran-Mischoxid-Tabletten in Abhängigkeit vom Lagerungszeitraum t in Tagen.

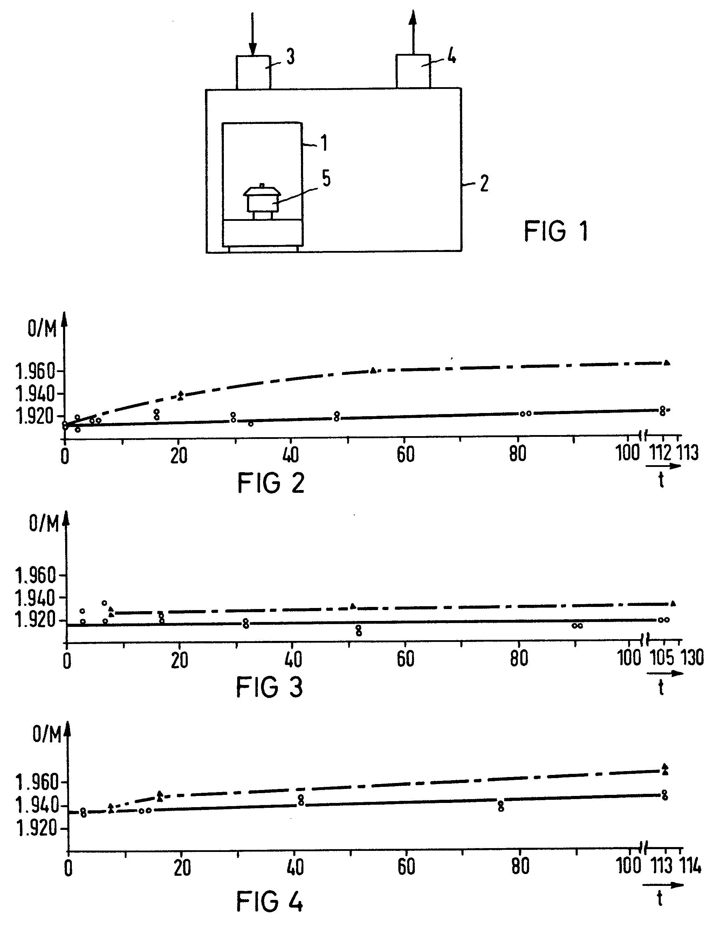

In Fig. 1 ist der gekühlte Lagerschrank 1 in einem Handschuhkasten 2 angeordnet. Dieser Handschuhkasten 2 ist mit einem Zuluftanschluss 3 und einem Abluftanschluss 4 versehen, denen nicht dargestellte Pump- und Filtereinrichtungen zugeordnet sind.

Im gekühlten Lagerschrank 1 ist ein dort befindlicher kleiner Exsikkator 5 angedeutet. Rohtabletten aus gepresstem $UO_2$- und $PuO_2$-Pulver (Presslinge) werden beispielsweise in einem in der deutschen Patentschrift 26 11 750 dargestellten Reduktionsofen zunächst in einem Gasgemisch aus inertem Stickstoff und 4 bis 8 Vol.% reduzierend wirkendem Wasserstoff bei einer Temperatur von etwa 1000 °C reduziert. Sodann werden diese Tabletten zur Einstellung eines unterstöchiometrischen Anfangs-Sauerstoff/Metall-Atomverhältnisses (O/M) in einem Sinterofen bei 1700 °C einer Reduktionsglühung in Argon unterworfen, das etwa 8 Vol.% Wasserstoff und Spuren von Wasserdampf enthält. Anschliessend werden die geglühten Tabletten (Sinterlinge) im Auslaufrohr des Sinterofens in gleicher Atmosphäre auf Normaltemperatur bzw. Raumtemperatur von ca. 20 °C bis 25 °C abgekühlt.

Diese abgekühlten Tabletten können sodann im Exsikkator 5 im Lagerschrank 1 nach Fig. 1 gelagert werden. Es ist auch möglich, diese Tabletten offen im gekühlten Lagerschrank 1 zu lagern. Die im gekühlten Lagerschrank gelagerten Tabletten werden auf einer Temperatur unterhalb der im Bereich von 20 °C bis 25 °C liegenden Normaltemperatur (Zimmertemperatur) gehalten. Günstig ist es, diese Tabletten auf einer Temperatur kleiner oder gleich 10 °C, vorzugsweise auf einer Temperatur im Bereich von 10 °C bis 4 °C, beispielsweise auf einer Temperatur von 5 °C, zu halten.

In den Fig. 2 bis 4 sind als Abszissen die Zeit (t) in Tagen und als Ordinaten die Sauerstoff/Metall-Atomverhältnisse (O/M) aufgetragen, welche an Plutonium-Uran-Mischoxid-Tabletten mit unterstöchiometrischem Ausgangs-Sauerstoff/Metall-Atomverhältnis gemessen wurden, die in einem gekühlten Lagerschrank nach Fig. 1 erfindungsgemäss behandelt bzw. nicht erfindungsgemäss behandelt wurden.

Fig. 4 bezieht sich auf Tabletten, deren Rohtabletten (Presslinge) aus einem Granulat gepresst wurden. Dieses Granulat wurde durch Vorkompaktieren und Brechen von $UO_2$- und $PuO_2$-Pulver und gemahlenen Rückläufen aus gesintertem $UO_2/PuO_2$ gewonnen.

Die durchgezogenen Kurven in den Fig. 2 und 3 beziehen sich jeweils auf Messergebnisse an Tabletten, die in einem Exsikkator 5 im gekühlten Lagerschrank 1 nach Fig. 1 auf 5 °C gehalten werden, während sich die durchgezogene Kurve in Fig. 4 auf Messergebnisse an Tabletten bezieht, die in offener Schale im gekühlten Lagerschrank 1 ebenfalls auf 5 °C gehalten werden.

Die strichpunktierten Kurven in den Fig. 2 bis 4 beziehen sich auf zu den jeweiligen Tabletten mit der durchgezogenen Kurve gleichartige Tabletten mit gleichem unterstöchiometrischen Ausgangs-Sauerstoff/Metall-Atomverhältnis, die im Handschuhkasten 2 ausserhalb des gekühlten Lagerschrankes 1 nach Fig. 1 auf Normaltemperatur bzw. Zimmertemperatur, d.h. auf 20 °C bis 25 °C in einem Exsikkator bzw. offener Schale gehalten, also nicht erfindungsgemäss behandelt wurden.

Die kreisförmigen Messpunkte in den Fig. 2 bis 4 beziehen sich jeweils auf die erfindungsgemäss auf 5 °C gehaltenen, also erfindungsgemäss behandelten und die dreieckigen Messpunkte jeweils auf die nur auf Zimmertemperatur gehaltenen, also nicht erfindungsgemäss behandelten Tabletten.

Wie die durchgezogenen Kurven in den Fig. 2 bis 4 zeigen, hat sich der Wert des unterstöchiometrischen Sauerstoff/Metall-Atomverhältnisses der jeweils erfindungsgemäss behandelten Tabletten während eines Lagerungszeitraumes von mehr als 100 Tagen um deutlich weniger als 0,01 gegenüber dem Ausgangsatomverhältnis erhöht, während dieses Atomverhältnis bei den nicht erfindungsgemäss behandelten Tabletten entsprechend den strichpunktierten Kurven sehr viel stärker gegenüber dem Ausgangsatomverhältnis angestiegen ist.

## Patentansprüche

1. Verfahren zum Behandeln von Plutoniumoxid und/oder Plutonium-Uran-Mischoxid durch Erhitzen in reduzierender Atmosphäre zum Zwecke des Einstellens eines vorgegebenen unterstöchiometrischen Wertes des Sauerstoff/Metall-Atomverhältnisses und anschliessendes Abkühlen des Oxides in einer Atmosphäre aus reduzierendem und/oder inertem Gas, dadurch gekennzeichnet, dass das Oxid auf eine solche Temperatur unterhalb der Normaltemperatur abgekühlt und auf dieser Temperatur gehalten wird, bei der sein Sauerstoff/Metall-Atomverhältnis während eines vorgegebenen Lagerungszeitraumes den vorgegebenen Wert nicht überschreitet.

2. Verfahren nach Anspruch 1, dadurch gekennzeichnet, dass das Oxid auf eine Temperatur abgekühlt und auf dieser Temperatur gehalten wird, bei der sich während des vorgegebenen Lagerungszeitraumes der Wert seines Sauerstoff/Metall-Atomverhältnisses um höchstens 0,01 erhöht.

3. Verfahren nach Anspruch 1, dadurch gekennzeichnet, dass das Oxid während des vorgegebenen Lagerungszeitraumes in sauerstoffhaltiger Atmosphäre, vorzugsweise Luft, gehalten wird.

4. Verfahren nach Anspruch 3, dadurch gekennzeichnet, dass das Oxid ab Erreichen der Normaltemperatur in sauerstoffhaltiger Atmosphäre gehalten wird.

5. Verfahren nach Anspruch 1, dadurch gekennzeichnet, dass das Oxid auf einer Temperatur kleiner oder gleich 10 °C gehalten wird.

6. Verfahren nach Anspruch 5, dadurch gekennzeichnet, dass das Oxid auf einer Temperatur im Bereich von 10 bis 4 °C, vorzugsweise auf 5 °C, gehalten wird.

## Claims

1. A process for the treatment of plutonium oxide and/or a mixed oxide of plutonium and uranium, by heating in a reducing atmosphere in order to set a predetermined, sub-stochiometric value for the oxygen/metal atomic ratio and subsequently cooling the oxide in an atmosphere of reducing and/or insert gas, characterised in that the oxide is cooled to and maintained at a temperature below normal temperature which is such that its oxygen/metal atomic ratio does not exceed the predetermined value during a predetermined storage time.

2. A process as claimed in Claim 1, characterised in that the oxide is cooled to and maintained at a temperature at which the value of its oxygen/metal atomic ratio increases by a maximum of 0.01 during the predetermined storage time.

3. A process as claimed in Claim 1, characterised in that the oxide is kept in an atmosphere containing oxygen, preferably air, during the predetermined storage time.

4. A process as claimed in Claim 3, characterised in that the oxide is kept in an atmosphere containing oxygen from the point at which the normal temperature is reached.

5. A process as claimed in Claim 1, characterised in that the oxide is maintained at a temperature lower than or equal to 10 °C.

6. A process as claimed in Claim 5, characterised in that the oxide is maintained at a temperature in the range of 10 °C to 4 °C, preferably at 5 °C.

**Revendications**

1. Procédé de traitement de l'oxyde de plutonium et/ou de l'oxyde mixte de plutonium et d'uranium, par chauffage en atmosphère réductrice en vue de régler le rapport atomique oxygène/métal à une valeur prescrite et ensuite par refroidissement de l'oxyde dans une atmosphère de gaz réducteur et/ou de gaz inerte, caractérisé en ce qu'il consiste à refroidir et à maintenir l'oxyde à une température, inférieure à la température ambiante, pour laquelle son rapport atomique oxygène/métal ne dépasse pas, pendant une durée de stockage donnée à l'avance, la valeur prescrite.

2. Procédé suivant la revendication 1, caractérisé en ce qu'il consiste à refroidir et à maintenir l'oxyde à une température pour laquelle la valeur de son rapport atomique oxygène/métal n'augmente, pendant la durée de stockage donnée à l'avance, au plus que de 0,01.

3. Procédé suivant la revendication 1, caractérisé en ce qu'il consiste à maintenir l'oxyde, dans une atmosphère chargée d'oxygène, de préférence de l'air, pendant la durée de stockage donnée à l'avance.

4. Procédé suivant la revendication 3, caractérisé en ce qu'il consiste à maintenir l'oxyde dans une atmosphère chargée d'oxygène dès qu'il atteint la température ambiante.

5. Procédé suivant la revendication 1, caractérisé en ce qu'il consiste à maintenir l'oxyde à une température inférieure ou égale à 10 °C.

6. Procédé suivant la revendication 5, caractérisé en ce qu'il consiste à maintenir l'oxyde à une température comprise entre 10 et 4 °C et, de préférence, de 5 °C.

FIG 1

FIG 2

FIG 3

FIG 4